# FASCICULE DE BREVET EUROPEEN

(11) **EP 2 916 029 B1**
(45) Date de publication et mention de la délivrance du brevet: **10.07.2019**
(21) Numéro de dépôt: 15154746.0
(22) Date de dépôt: 11.02.2015
(51) Int. Cl.: F16D 69/02, F16D 13/64

(54) **Garniture d'embrayage à résistance mécanique élevée apres abus thermique**
Kupplungsdichtung mit erhöhtem mechanischem Widerstand nach übermäßiger Hitzeexposition
Clutch lining with high mechanical strength following overheating treatment

(30) Priorité: 04.03.2014 FR 1451751
(43) Date de publication de la demande: 09.09.2015
(73) Titulaire: Valeo Matériaux de Friction, 87020 Limoges (FR)
(72) Inventeur: Bonnet, Emmanuel, 87000 Limoges (FR); Boyer, Gérard, 87480 Saint Priest Taurion (FR); Degery, Pascal, 87240 Ambazak (FR); Dijoux, Jean, 87000 Limoges (FR)
(74) Mandataire: Cardon, Nicolas

(56) Documents cités:
- EP-A1- 1 124 071
- US-A- 4 244 994
- US-A- 5 842 551
- US-A- 6 009 605
- US-A1- 2005 241 907

## Description

La présente invention concerne une garniture de frottement à sec pour dispositif d'embrayage pour véhicule automobile.

On connaît déjà dans l'état de la technique des garnitures de frottement à sec pour dispositif d'embrayage, qui sont constituées d'une pluralité de couches, et typiquement d'une couche de friction, ou couche noble, et d'une partie support de cette couche de friction (souvent appelée sous-couche), dont la fonction est de résister mécaniquement, en particulier aux contraintes centrifuges lors de l'entraînement de la garniture à une vitesse de rotation élevée.

De telles parties support, ou sous-couches, sont typiquement formées dans un matériau composite de type résine/fil(s) de renfort, dont les fils de renforts sont une combinaison de fibres organiques, (par exemple des fibres d'acrylique ou des fibres d'aramide), de fibres minérales, (par exemple des fibres de verre ou basalte), ainsi que de fibres métalliques par exemple de fibres en cuivre, laiton, acier, ou en aluminium. Ceci est notamment décrit dans le document EP 1124071 qui concerne une garniture de frottement à sec pour disque de frein dans laquelle le renfort est formé par une pluralité de faisceaux de fibres. De façon relativement récente, les constructeurs automobiles s'intéressent à l'obtention d'embrayages pouvant fonctionner de façon satisfaisante dans des conditions sévères à température élevée que l'on simule par un test dit « d'abus thermique », c'est-à-dire en l'espèce après une exposition des garnitures de friction à 360°C pendant trois heures.

On a trouvé que les garnitures de frottement à sec existantes avaient des qualités notablement dégradées après un tel test d'abus thermique, et ne donnaient généralement plus satisfaction dans un tel cas.

Il existe donc un besoin de réaliser des garnitures de frottement à sec dont les propriétés de résistance mécanique à la centrifugation soient peu sensibles à un abus thermique, et qui permettent de conserver d'autres propriétés satisfaisantes telles que par exemple la planéité de ces garnitures.

De telles garnitures doivent en outre être produites avec des technologies compatibles avec l'industrie automobile et ses coûts de fabrication, et non avec des technologies particulièrement onéreuses telles que celles que l'on rencontre dans le domaine aéronautique ou spatial, comme par exemple des composites tridimensionnels.

Un but de l'invention est de permettre la réalisation de garnitures de frottement à sec adaptées à l'industrie automobile, et présentant de meilleures caractéristiques mécaniques que celles de l'art antérieur, en particulier après un abus thermique.

A cet effet, un objet de l'invention est une garniture de frottement à sec pour dispositif d'embrayage pour véhicule automobile, comprenant:
- une couche de friction comprenant une face de friction;
- une partie support de la couche de friction,
**caractérisée en ce que** la partie support comprend:
- un fil de renfort s'étendant sur plusieurs tours autour d'un axe central perpendiculaire à la face de friction, sensiblement parallèlement à cette face de friction, en suivant un trajet évoluant de façon à réaliser des chevauchements du fil de renfort pour former un maillage, ce fil de renfort comprenant au moins un fil élémentaire dit fil élémentaire carbone, formé par une pluralité de fibres élémentaires continues de carbone, et :
- un liant imprégnant et/ou entourant le fil de renfort, comprenant au moins une résine thermodurcissable, un matériau élastomère et une charge.

Selon un mode préféré de réalisation de l'invention, le fil de renfort comprend avantageusement une pluralité de fils élémentaires torsadés ensemble, dont au moins le fil élémentaire carbone et au moins un autre fil élémentaire, dit fil élémentaire non carbone, comprenant une pluralité de fibres dont une majorité au moins et de préférence la totalité sont formées d'un ou de plusieurs matériau(x) non carbone.

Des fils de renfort composés de fibres élémentaires de carbone sont déjà connus de l'état de la technique, et disponibles notamment sous forme de tissés que l'on peut mettre en oeuvre par imprégnation, par exemple sous forme de plusieurs couches, ou nappes superposées. Dans de tels tissés carbone, les fils d'une nappe sont disposés de façon essentiellement rectiligne. On utilise typiquement plusieurs nappes avec des orientations différentes des fils permettant d'obtenir un renfort dans un grand nombre de directions. Toutefois, dans le cas d'une garniture de frottement, une partie des fils aurait une direction générale radiale ou proche d'une direction radiale de sorte que leur contribution à la résistance mécanique de la garniture lors d'efforts centrifuges serait faible voire nulle.

Les fibres de carbone sont par ailleurs connues pour leur excellente résistance à la traction, mais a contrario leur relativement faible résistance à la flexion ou au cisaillement. Il semblait donc très peu probable a priori que l'on puisse enrouler sur un ou plusieurs tours de 360° de tels fils de renfort en carbone sans rencontrer des problèmes de fabrication très importants en utilisant des techniques de fabrication et de formage applicables dans l'industrie automobile, et notamment enrouler de tels fils de carbone préalablement torsadés avec d'autres fils, par exemple dans une retordeuse conventionnelle.

C'est pourquoi, il a également été proposé dans l'état de la technique, par exemple dans la demande de brevet des Etats-Unis d'Amérique US 2013/0118142 A1, d'utiliser un fil de renfort en fibres de carbone discontinues, comprenant des fibres de carbone discontinues, typiquement de longueur comprise entre 10 mm et 250 mm.

De telles fibres ont très généralement une longueur de quelques dizaines de mm, conduisant à une souplesse importante du fil, considéré comme un fil pouvant être qualifié de fil de couture, conduisant à une flexibilité élevée et permettant d'utiliser des courbures du fil importantes. De tels fils à fibres élémentaires de carbone discontinues (avec des discontinuités, typiquement nombreuses, à l'intérieur d'un fil unique, et non pas seulement aux extrémités) ont cependant une résistance mécanique inférieure à celles d'un fil à fibres continues.

La demanderesse a toutefois découvert que les graves problèmes techniques anticipés pour la fabrication et le formage de fils carbone à fibres élémentaires continues, notamment pour les étapes impliquant des contraintes de cisaillement ou de flexion notables (tels que ceux rencontrés dans une retordeuse ou une formeuse de fils de renfort de type(s) utilisé(s) dans l'industrie automobile), ont bien été rencontrés comme il était attendu mais, de façon inattendue, ont pu être résolus par des moyens simples comme il sera expliqué plus loin.

En utilisant un enroulement présentant une direction générale circonférentielle, les garnitures résistent de façon notablement améliorée aux contraintes centrifuges, contrairement à un tissé carbone, dont les orientations des fibres sont très variables. Elles ont par ailleurs une résistance mécanique notablement améliorée, par rapport à un fil composé de fibres de carbone discontinues.

Dans un mode préféré de réalisation de l'invention, le fil de renfort comprend une pluralité de fils élémentaires torsadés ensemble, dont au moins le fil élémentaire carbone et au moins un autre fil élémentaire, dit fil élémentaire non carbone, comprenant une pluralité de fibres dont une majorité au moins et de préférence la totalité sont formées d'un ou de plusieurs matériau(x) non carbone.

Avantageusement, le fil élémentaire non carbone comprend:
- une pluralité de fibre(s) élémentaires organique(s), par exemple de fibres élémentaires appartenant au groupe formé par les fibres d'acrylique optionnellement pré-oxydées, les fibres d'aramide, et les fibres de viscose,
- au moins une, et de préférence une pluralité de fibre(s) élémentaires non organique(s), par exemple une pluralité de fibres élémentaires appartenant au groupe formé par les fibres de verre ou de basalte, et les fibres formés par un fil continu de cuivre, de laiton, d'acier ou d'aluminium.

Ceci permet de réaliser un fil de renfort mixte carbone/non carbone, de coût inférieur à celui d'un fil entièrement formé de fibres de carbone.

De façon particulièrement avantageuse, le fil élémentaire non carbone comprend une pluralité de fibres élémentaires organiques, qui sont globalement voluminisées pour faciliter une infiltration de résine dans le fil de renfort.

On a en effet trouvé, de façon inattendue, qu'un fil élémentaire non carbone comprenant une pluralité de fibres élémentaires organiques présentait une meilleure affinité que la fibre de carbone avec la résine, et, dans une conception torsadée (ou selon une appellation équivalente retordue) mixte: fil élémentaire carbone/ fil élémentaire non carbone, ce dernier fil élémentaire constituait un chemin de pénétration du liant résinique vers l'intérieur du fil de renfort, renforçant le contact fibres de carbone / liant résinique, et l'imbrication de la partie carbone du fil de renfort avec le liant, réduisant les risques de dissociation fil de renfort/matrice sur le matériau fini. L'effet de de pénétration du liant résinique vers l'intérieur du fil de renfort est encore accru lorsque les fibres sont globalement voluminisées.

Le terme « globalement voluminisées » (ou globalement texturisées) s'entend comme qualifiant un ensemble de fibres comprenant ensemble un taux de porosité augmenté par rapport à un état initial dans lequel les fibres sont plus rapprochées entres elles.

Le fil élémentaire non carbone comprend donc une proportion notable de fibres élémentaires organiques. Le terme organique s'entend ici comme qualifiant une fibre composée à plus de 50% poids d'éléments du groupe C, H, O, N, à l'exception des fibres de carbone elles-mêmes qui, conventionnellement, ne sont pas considérées comme organiques.

Au moyen d'une machine appelée dans l'état de l'art formeuse, le fil de renfort, préalablement imprégné ou revêtu de liant est courbé, de façon à suivre un trajet, soit sans ondulation, soit avec une ondulation formant un certain nombre de lobes radiaux par tour, comme il sera montré plus loin en liaison avec les figures annexées.

Un trajet sans ondulation correspond à un nombre de lobes par tour inférieur à 1 (communément appelé enroulement circulaire ou concentrique), alors qu'un trajet avec ondulation correspond à un nombre de lobes par tour supérieur à 1. On a trouvé que plus le nombre de lobes par tour est élevé, meilleure est la planéité de la garniture finale obtenue. On a également constaté que plus le nombre de lobes par tour est faible, et plus la résistance mécanique est élevée en essai de centrifugation.

Avantageusement, le trajet du fil de renfort forme, sur chaque tour, une ondulation formant des lobes radiaux dont le nombre par tour est compris entre 0 (enroulement circulaire) et 10, et de préférence compris entre 2 et 7, ou même de façon très préférée compris entre 4 et 7. On a trouvé que ces plages de valeurs réalisaient un bon compromis entre l'obtention d'une planéité satisfaisante, et celle d'une résistance mécanique élevée en essai de centrifugation après un abus thermique.

Typiquement, l'ondulation s'étend entre deux cercles concentriques de façon que le fil de renfort tangente alternativement chacun de ces cercles.

Le nombre de tours du fil de renfort est régi d'une part par l'épaisseur finale souhaitée pour la garniture. Il est aussi régi par la nécessité d'obtenir un maillage suffisant de la couche support de la garniture, ce qui est typiquement obtenu, pour une garniture de frottement d'un véhicule de tourisme, avec un nombre de tours compris entre 6 et 15, et de préférence entre 7 et 13, bornes comprises. Typiquement, on choisit un nombre d'ondes par tour tel qu'après avoir enroulé ce fil de renfort sur un nombre de tours global déterminé, les deux extrémités du fil se rejoignent sensiblement.

La couche support de la garniture comprend avantageusement:
- de 15% à 70% en volume de résine (et de façon préférée de 30% à 60% en volume) ;
- de 2% à 40% en volume de fil(s) élémentaire(s) carbone (et de façon préférée de 7% à 30% en volume);
- de 1% à 40% en volume de fil(s) élémentaire(s) non carbone (et de façon préférée de 5% à 30% en volume);
- de 5% à 30% en volume d'élastomère(s) (et de façon préférée de 8% à 22% en volume);
- de 2% à 20% en volume de charge(s) (et de façon préférée de 4% à 15% en volume).

On peut utiliser divers types de résine thermodurcissable. Avantageusement, on utilisera une résine de type phénoplaste, par exemple telle que phénol/formaldéhyde (type résol ou novolaque), ou aminoplaste (par exemple type mélamine ou urée/formaldéhyde), ou mixte, par exemple phénol/formaldéhyde modifiée mélamine, ou mixte mélamine formaldéhyde modifiée phénol, ou un mélange en proportion quelconque de plusieurs de ces résines.

On pourra par exemple utiliser des résines thermodurcissables de la famille des phénoplastes ou de la famille des aminoplastes, (ou un mélange de ces résines en proportion quelconque).

Le fil élémentaire carbone est typiquement constitué de fibres élémentaires continues de carbone, graphitisées ou non graphitisées, de diamètre de fibre compris entre 5 et 25 micromètres, ce fil élémentaire carbone ayant de préférence une masse linéique typiquement comprise entre 50 et 5000 tex et une résistance à la traction comprise entre 3000 MPa et 6000 MPa. Par fibres continues, on entend des fibres ne présentant essentiellement des discontinuités qu'aux extrémités du fil.

Le fil élémentaire non carbone comprend de préférence des fibres élémentaires du groupe formé par les fibres de viscose, d'acrylique, et d'acrylique préoxydée.

Il comprend de préférence également des fibres formées par un monofilament de cuivre ou de laiton.

Pour le liant, on peut choisir comme matériau élastomère un élastomère appartenant au groupe constitué par l'un des constituants suivants ou l'un quelconque de leurs mélanges: le polyisoprène (naturel, dit NR, ou synthétique, dit IR), le co-polymère styrène-butadiène (dit SBR), le co-polymère butadiène-acrylonitrile (dit caoutchouc nitrile, ou NBR).

On peut aussi utiliser l'un ou plusieurs des composés suivants, seul(s) ou en mélange avec l'un ou plusieurs des autres élastomères déja mentionnés: le copolymère éthylène-propylène (dit EP ou EPM) ; le ter-polymère éthylène-propylène-diène (EPDM) ; le polyéther bloc amide (PEBA ou TPE).

On peut également utiliser, seuls ou en mélange, un ou plusieurs élastomères résistant à de hautes températures, par exemple un silicone (notamment les qualités dites VMQ (vinyl méthyl silicone), ou PVMQ, FVMQ ou MQ); un perfluoroélastomère (dit FFKM) ; un copolymère éthylène-acétate de vinyle (EVA ou EVM) ; un élastomère polyacrylique (ACM) ; un copolymère éthylène acrylique (AEM) ; un polyéthylène chlorosulfoné (CSM) ; un élastomère d'épichlorhydrine (CO et ECO), etc...

La charge est typiquement une poudre d'un matériau appartenant au groupe constitué par l'un des constituants suivants ou l'un quelconque de leurs mélanges: du noir de carbone, du mica, du soufre, du carbonate de calcium, et du sulfate de baryum.

Optionnellement, le liant pourrait aussi comprendre des fibres courtes, différentes des fibres continues de carbone précédemment décrites, pouvant aussi être incorporées au matériau résinique, mais étant alors considérées comme des renforts additionnels de type fibreux, et non comme des charges.

L'invention concerne également un dispositif d'embrayage à sec pour véhicule automobile, **caractérisé en ce qu'il** comprend une garniture de frottement à sec telle que décrite précédemment.

Dans tout ce qui précède, chaque fibre élémentaire continue de carbone peut s'étendre sur plusieurs tours autour de l'axe central perpendiculaire à la face de friction.

Dans tout ce qui précède, chaque fibre élémentaire continue de carbone peut s'étendre sur plusieurs tours dans un plan majoritairement perpendiculaire à l'axe central qui est perpendiculaire à la face de friction.

Dans tout ce qui précède, le fil de renfort peut s'étendre sur un nombre de tours compris entre cinq et quinze, notamment entre huit et douze, notamment égal à dix.

Dans tout ce qui précède, le fil de renfort peut être unique. En variante, plusieurs fils de renfort peuvent être prévus.

L'invention sera mieux comprise à la lecture de la description qui va suivre, donnée uniquement à titre d'exemple et faite en se référant aux dessins dans lesquels :
La figure 1 représente schématiquement une garniture de frottement, vue en coupe.
La figure 2 représente schématiquement le maillage d'une partie support d'une garniture selon l'invention, comprenant un fil de renfort unique.
Les figures 3 et 4 sont des figures théoriques représentant le trajet d'un fil de renfort comprenant une ondulation.
La figure 5 représente schématiquement une partie support d'une garniture selon l'invention, comprenant un fil de renfort unique sans ondulation.
La figure 6 représente schématiquement un fil de renfort retordu.
La figure 7 représente schématiquement un fil élémentaire carbone guidé par un oeillet de guidage non approprié.

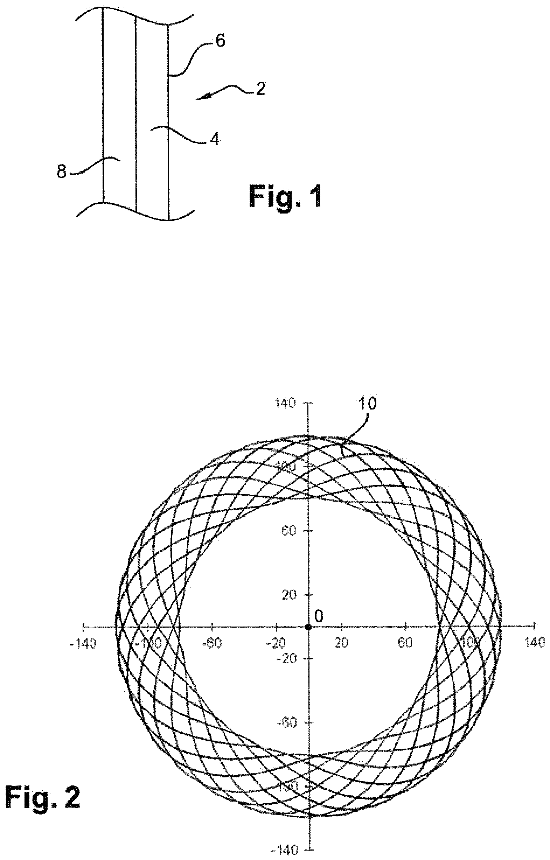

On se réfère maintenant à la figure 1, qui représente schématiquement une garniture de frottement à sec 2 selon l'invention, vue en coupe. Cette garniture comprend une couche de friction 4 comprenant une face de friction 6, et une partie support 8 sous-jacente à la couche de friction 4. Une telle garniture comprend typiquement deux éléments : couche de friction/ partie support, mais on ne sortirait pas du cadre de l'invention si elle en comprenait un nombre plus élevé, par exemple avec une couche intermédiaire entre la couche de friction 4 et la partie support 8.

La figure 2 montre un fil de renfort unique 10 (de la partie support) formant dix tours, chaque partie de ce fil correspondant à un tour étant sensiblement dans un plan perpendiculaire à un axe central passant par le point central O, c'est-à-dire parallèle à la face de friction, non représentée sur cette figure.

Chaque tour correspond ici à 2,9 lobes radiaux s'étendant entre un diamètre intérieur de 160 mm (80 mm de part et d'autre du point O), et un diamètre extérieur de 240 mm (120 mm de part et d'autre du point O).

On appelle lobe la forme formée par le fil comprise entre deux points successifs du trajet du fil situés à une distance minimale de l'axe central et du point O. On peut constater que les points de chevauchement des fils (superposition axiale sans qu'il y ait nécessairement un contact) conduisent à ce que le fil forme un maillage (en vue axiale) relativement fin de la couche support, renforçant sa résistance mécanique. Le fil a partout une composante notable dans la direction circonférentielle, ce qui accroît la résistance mécanique lors d'une rotation (résistance aux efforts de centrifugation).

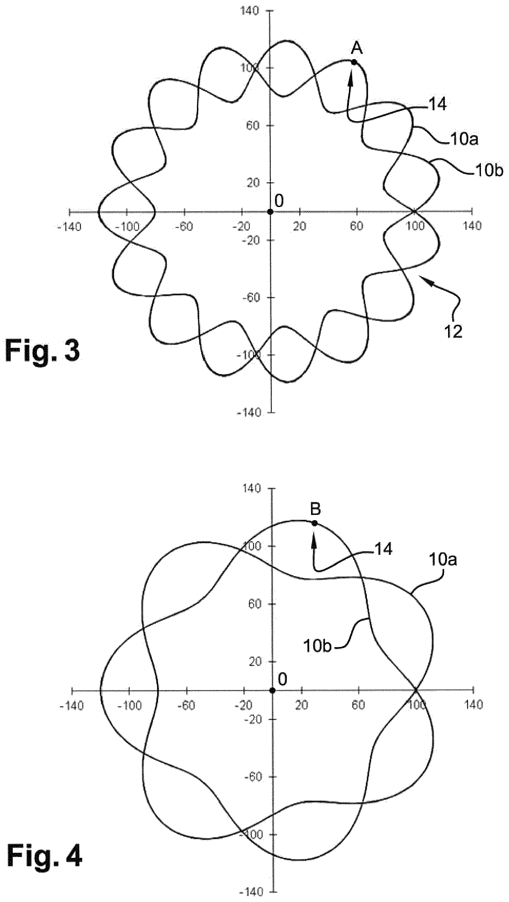

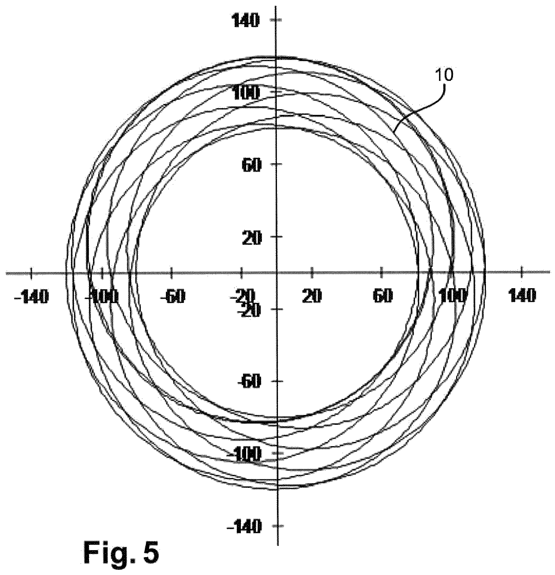

Les figures 3 et 4 sont des figures théoriques d'un fil de renfort formant une ondulation comprenant des lobes radiaux, soit 7,5 lobes par tour pour la figure 3, et 3,5 lobes par tour pour la figure 4. Ce ne sont que des figures théoriques car le nombre de tours est seulement de deux pour les garnitures de ces deux figures, avec pour chaque tour une partie correspondante 10a, 10b du fil de renfort, ce qui produit un maillage typiquement insuffisant.

Ces figures permettent cependant d'apprécier l'influence du nombre de lobes par tour sur la géométrie de l'ondulation le long du trajet du fil: L'observation de la zone 14 de courbure maximum du fil, et du point A de courbure maximum (sommet d'un lobe) sur la figure 3, ainsi que celle de la zone 14 et du point B sur la figure 4, montre que plus le nombre de lobes par tour est élevé (cas de la garniture de la figure 3 par rapport à celle de la figure 4), et plus la courbure est élevée. Plus cette courbure est élevée, et plus la planéité de la couche support, donc de la garniture, est assurée, du fait d'un effet de rigidification de chaque zone correspondant à un lobe, en liaison avec la rigidité élevée d'un fil de renfort comprenant des fibres de carbone. Inversement, la direction moyenne du fil de renfort présente une composante inférieure dans la direction circonférentielle lorsque la courbure est élevée, ce qui limite la résistance mécanique de la couche support en cas d'efforts centrifuges.

La figure 5 représente un enroulement dit « sans ondulation » d'un fil de renfort 10, dans lequel il n'y a que 0,899 lobe par tour. Avec une telle configuration, la résistance mécanique apportée par le fil de renfort est élevée du fait que la direction du fil comprend une composante circonférentielle importante. Par contre la planéité de la garniture n'est plus assurée de façon notable.

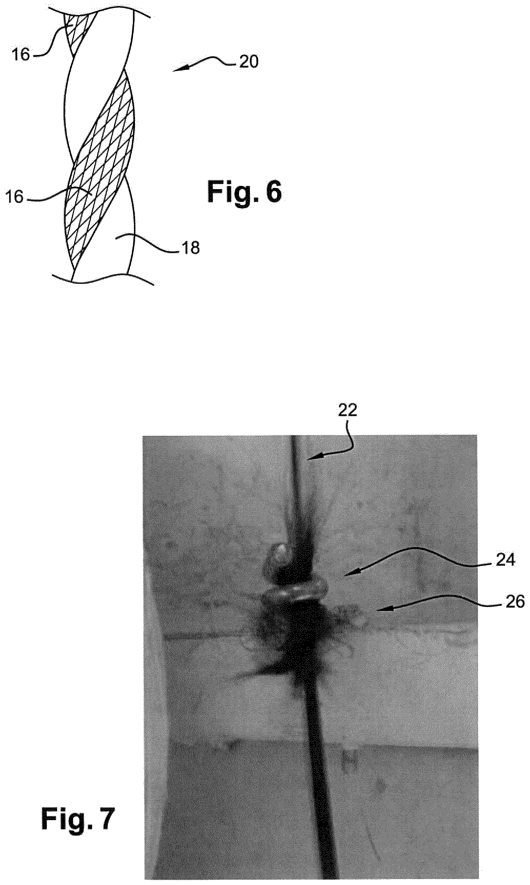

La figure 6 représente schématiquement un tronçon de fil de renfort 20 mixte carbone / non carbone, formé d'un fil élémentaire carbone 16 torsadé avec un fil élémentaire non carbone 18, typiquement un fil élémentaire comprenant des fibres élémentaires globalement voluminisées en acrylique. Ces deux fils sont torsadés ensemble dans une «retordeuse», dispositif bien connu dans l'industrie pour la fabrication de fils ou câbles comprenant des fils élémentaires torsadés. On peut noter que le fil élémentaire carbone subit sans dommages des contraintes de flexion et une courbure importante, ce qui n'était pas prévisible a priori.

La figure 7 illustre un problème rencontré avec une retordeuse conventionnelle (dispositif bien connu dans l'industrie pour retordre et cintrer des fils textiles ou métalliques) dans le cas de la production d'un fil élémentaire carbone : Un fil élémentaire carbone 22 passe dans un oeillet de guidage conventionnel en acier 24. Le frottement, et la courbure locale au niveau de l'oeillet (peu visible sur la figure du fait de l'angle de vue) conduisent à des problèmes de dégradation importante du fil élémentaire carbone par peluchage (rupture et accumulation d'une partie des fibres élémentaires de carbone). La grande longueur des fibres élémentaires continues de carbone entraîne notament une accumulation localisée de fibres ayant rompu, au niveau de l'oeillet.

Le processus de production de la garniture grâce à l'ensemble de production retordeuse / formeuse a pu cependant, de façon inattendue, être maîtrisé par des modifications mineures :
- Remplacement des oeillets en acier par des oeillets en céramique (et rodage préalable de l'installation si l'état de surface n'est pas très lisse).
- Augmentation du diamètre des poulies de renvoi (par exemple de 20%) ;
- Réduction si nécessaire des angles aux changements de direction et/ou de la tension du fil.

Sans être en rien lié par une interprétation particulière, on estime que l'utilisation de fils élémentaires comprenant des fibres élémentaires organiques en association avec un fil élémentaire carbone dans une retordeuse pourrait conduire à ce que les contraintes superficielles internes au fil de renfort (contraintes liées aux frottements internes entre fibres élémentaires ou entre fils élémentaires) soient réduites au niveau de la surface des fibres de carbone en contact avec les fibres organiques, par rapport à un contact avec un fil ou des fibres relativement dures, (fibres de verre ou d'acier par exemple).

De plus, une surface en céramique relativement lisse, et des changements de direction modérés contribuent à supprimer le peluchage d'un fil élémentaire carbone.

## Revendications

1. Garniture (2) de frottement à sec pour dispositif d'embrayage pour véhicule automobile, comprenant:
- une couche de friction (4) comprenant une face de friction (6);
- une partie support (8) de la couche de friction (4),
**caractérisée en ce que** la partie support comprend:
- un fil de renfort (10, 10a, 10b, 20) s'étendant sur plusieurs tours autour d'un axe central perpendiculaire à la face de friction (6), sensiblement parallèlement à cette face de friction (6), en suivant un trajet évoluant de façon à réaliser des chevauchements du fil de renfort pour former un maillage, ce fil de renfort comprenant au moins un fil élémentaire dit fil élémentaire carbone (16), formé par une pluralité de fibres élémentaires continues de carbone, et:
- un liant imprégnant et/ou entourant le fil de renfort, comprenant au moins une résine thermodurcissable, un matériau élastomère et une charge.

2. Garniture selon la revendication 1, dans laquelle le fil de renfort (10, 10a, 10b, 20) comprend une pluralité de fils élémentaires torsadés ensemble (16, 18), dont au moins ledit fil élémentaire carbone (16) et au moins un autre fil élémentaire (18), dit fil élémentaire non carbone, (18) comprenant une pluralité de fibres dont une majorité au moins et de préférence la totalité sont formées d'un ou de plusieurs matériau(x) non carbone.

3. Garniture selon la revendication 2 dans laquelle le fil élémentaire non carbone comprend:
- une pluralité de fibre(s) élémentaires organique(s), par exemple de fibres élémentaires appartenant au groupe formé par les fibres d'acrylique optionellement préoxydées, les fibres d'aramide, et les fibres de viscose,
- au moins une, et de préférence une pluralité de fibre(s) élémentaires non organique(s), par exemple une pluralité de fibres élémentaires appartenant au groupe formé par les fibres de verre ou de basalte, et les fibres formés par un fil continu de cuivre, de laiton, d'acier ou d'aluminium.

4. Garniture selon l'une quelconque des revendications précédentes dans laquelle le trajet du fil de renfort (10, 10a, 10b, 20) forme, sur chaque tour, une ondulation formant des lobes radiaux dont le nombre par tour est compris entre 2 et 7, et de préférence compris entre 4 et 7.

5. Garniture selon la revendication 4 dans laquelle l'ondulation s'étend entre deux cercles concentriques de façon que le fil de renfort tangente alternativement chacun de ces cercles.

6. Garniture selon l'une quelconque des revendications précédentes dans laquelle le fil de renfort (10, 10a, 10b) s'étend autour de l'axe central sur un nombre de tours compris entre 6 et 15, et de préférence entre 7 et 13, bornes comprises.

7. Garniture selon l'une quelconque des revendications précédentes, dans laquelle la couche support (8) comprend:
- de 15% à 70% en volume de résine;
- de 2% à 40% en volume de fil(s) élémentaire(s) carbone;
- de 1% à 40% en volume de fil(s) élémentaire(s) non carbone;
- de 5% à 30% en volume d'élastomère(s);
- de 2% à 20% en volume de charge(s).

8. Garniture selon l'une quelconque des revendications précédentes dans laquelle la résine est une résine de type phénoplaste, ou aminoplaste, ou mixte phénol/formaldéhyde modifiée mélamine, ou mixte mélamine/formaldéhyde modifiée phénol, ou est un mélange quelconque de plusieurs de ces résines.

9. Garniture selon l'une quelconque des revendications précédentes dans laquelle le fil élémentaire carbone (16) est constitué de fibres élémentaires continues de carbone, graphitisées ou non graphitisées, de diamètre de fibre compris entre 5 et 25 micromètres, ce fil élémentaire carbone ayant une masse linéique comprise entre 50 et 5000 tex et une résistance à la traction comprise entre 3000 MPa et 6000 MPa.

10. Garniture selon l'une quelconque des revendications 2 à 3 dans laquelle le fil élémentaire non carbone comprend des fibres élémentaires du groupe formé par les fibres de viscose, d'acrylique, et d'acrylique préoxydée.

11. Garniture selon l'une quelconque des revendications précédentes dans laquelle, ledit matériau élastomère appartient au groupe constitué par l'un des constituants suivants ou l'un quelconque de leurs mélanges: le polyisoprène, le copolymère styrène-butadiène, et le copolymère butadiène-acrylonitrile.

12. Garniture selon l'une quelconque des revendications précédentes dans laquelle la charge est une poudre d'un matériau appartenant au groupe constitué par l'un des constituants suivants ou l'un quelconque de leurs mélanges: du noir de carbone, du mica, du soufre, du carbonate de calcium, et du sulfate de baryum.

13. Garniture selon l'une quelconque des revendications précédentes dans laquelle chaque fibre élémentaire continue de carbone s'étend sur plusieurs tours autour de l'axe central perpendiculaire à la face de friction (6).

14. Dispositif d'embrayage pour véhicule automobile **caractérisé en ce qu'il** comprend une garniture de frottement à sec selon l'une quelconque des revendications 1 à 13.

## Patentansprüche

1. Trockenreibbelag (2) für eine Kupplungsvorrichtung eines Kraftfahrzeugs, der enthält:
- eine Reibschicht (4), die eine Reibseite (6) enthält;
- einen Trägerteil (8) der Reibschicht (4), **dadurch gekennzeichnet, dass** der Trägerteil enthält:
- einen Verstärkungsdraht (10, 10a, 10b, 20), der sich über mehrere Umdrehungen um eine Mittelachse lotrecht zur Reibseite (6) im Wesentlichen parallel zu dieser Reibseite (6) erstreckt, indem er einer Bahn folgt, die sich so entwickelt, dass sie Überlappungen des Verstärkungsdrahts herstellt, um ein Maschengitter zu formen, wobei dieser Verstärkungsdraht mindestens einen Elementardraht enthält, Kohlenstoff-Elementardraht (16) genannt, der von einer Vielzahl von endlosen Kohlenstoff-Elementarfasern gebildet wird, und:
- ein Bindemittel, das den Verstärkungsdraht imprägniert und/oder umgibt, das mindestens ein wärmehärtbares Harz, ein Elastomermaterial und einen Füllstoff enthält.

2. Belag nach Anspruch 1, wobei der Verstärkungsdraht (10, 10a, 10b, 20) eine Vielzahl von miteinander verdrillten Elementardrähten (16, 18) enthält, darunter mindestens der Kohlenstoff-Elementardraht (16) und mindestens ein anderer Elementardraht (18), Nicht-Kohlenstoff-Elementardraht (18) genannt, der eine Vielzahl von Fasern enthält, von denen mindestens die meisten und vorzugsweise alle aus einem oder mehreren Nicht-Kohlenstoff-Materialien geformt sind.

3. Belag nach Anspruch 2, wobei der Nicht-Kohlenstoff-Elementardraht enthält:
- eine Vielzahl von organischen Elementarfasern, zum Beispiel von Elementarfasern, die zu der Gruppe gehören, die von den optional voroxidierten Acrylfasern, den Aramidfasern und den Viskosefasern gebildet wird,
- mindestens eine, und vorzugsweise eine Vielzahl von nicht organischen Elementarfasern, zum Beispiel eine Vielzahl von Elementarfasern, die zu der Gruppe gehören, die von den Glas- oder Basaltfasern und den Fasern gebildet wird, die von einem endlosen Kupfer- Messing-, Stahl- oder Aluminiumdraht gebildet werden.

4. Belag nach einem der vorhergehenden Ansprüche, wobei die Bahn des Verstärkungsdrahts (10, 10a, 10b, 20) bei jeder Umdrehung eine Wellenform bildet, die radiale Erhöhungen bildet, deren Anzahl pro Umdrehung zwischen 2 und 7, und vorzugsweise zwischen 4 und 7 liegt.

5. Belag nach Anspruch 4, wobei die Wellenform sich zwischen zwei konzentrischen Kreisen derart erstreckt, dass der Verstärkungsdraht abwechselnd jeden dieser Kreise tangiert.

6. Belag nach einem der vorhergehenden Ansprüche, wobei der Verstärkungsdraht (10, 10a, 10b) sich um die Mittelachse über eine Anzahl von Umdrehungen zwischen 6 und 15 und vorzugsweise zwischen 7 und 13 einschließlich erstreckt.

7. Belag nach einem der vorhergehenden Ansprüche, wobei die Trägerschicht (8) enthält:
- 15 bis 70 Volumenprozent Harz;
- 2 bis 40 Volumenprozent Kohlenstoff-Elementardraht(drähte);
- 1 bis 40 Volumenprozent Nicht-Kohlenstoff-Elementardraht(drähte);
- 5 bis 30 Volumenprozent Elastomermaterial(ien);
- 2 bis 20 Volumenprozent Füllstoff(e).

8. Belag nach einem der vorhergehenden Ansprüche, wobei das Harz ein Harz von der Art Phenoplast oder Aminoplast oder gemischt melaminmodifiziertes Phenol/Formaldehyd, oder gemischt phenolmodifiziertes Melamin/Formaldehyd, oder eine beliebige Mischung mehrerer dieser Harze ist.

9. Belag nach einem der vorhergehenden Ansprüche, wobei der Kohlenstoff-Elementardraht (16) aus endlosen Kohlenstoff-Elementarfasern, graphitisiert oder nicht-graphitisiert, mit einem Faserdurchmesser zwischen 5 und 25 Mikrometer besteht, wobei dieser Kohlenstoff-Elementardraht eine längenbezogene Masse zwischen 50 und 5000 tex und eine Zugfestigkeit zwischen 3000 MPa und 6000 MPa hat.

10. Belag nach einem der Ansprüche 2 bis 3, wobei der Nicht-Kohlenstoff-Elementardraht Elementarfasern der Gruppe enthält, die von den Viskose-, Acryl- und voroxidierten Acrylfasern gebildet wird.

11. Belag nach einem der vorhergehenden Ansprüche, wobei das Elastomermaterial zu der Gruppe gehört, die aus einem der folgenden Bestandteile oder einer beliebigen ihrer Mischungen besteht: Polyisopren, Styrol-Butadien-Copolymer und Butadien-Acrylnitril-Copolymer.

12. Belag nach einem der vorhergehenden Ansprüche, wobei der Füllstoff ein Pulver aus einem Material ist, das zu der Gruppe gehört, die aus einem der folgenden Bestandteile oder einer beliebigen ihrer Mischungen besteht: Ruß, Glimmer, Schwefel, Calciumcarbonat und Bariumsulfat.

13. Belag nach einem der vorhergehenden Ansprüche, wobei jede endlose Kohlenstoff-Elementarfaser sich über mehrere Umdrehungen um die Mittelachse lotrecht zur Reibseite (6) erstreckt.

14. Kupplungsvorrichtung für ein Kraftfahrzeug, **dadurch gekennzeichnet, dass** sie einen Trockenreibbelag nach einem der Ansprüche 1 bis 13 enthält.

## Claims

1. Dry friction lining (2) for a motor vehicle clutch device, comprising:
- a friction layer (4) comprising a friction face (6);
- a support portion (8) of the friction layer (4), **characterized in that** the support portion comprises:
- a reinforcing yarn (10, 10a, 10b, 20) extending over several turns around a central axis perpendicular to the friction face (6), substantially parallel to this friction face (6), following a path that changes so as to create overlaps of the reinforcing yarn in order to form a mesh, this reinforcing yarn comprising at least one elementary yarn, referred to as a carbon elementary yarn (16), formed by a plurality of continuous elementary carbon fibres, and:
- a binder that impregnates and/or surrounds the reinforcing yarn, comprising at least a thermosetting resin, an elastomer material and a filler.

2. Lining according to Claim 1, in which the reinforcing yarn (10, 10a, 10b, 20) comprises a plurality of elementary yarns twisted together (16, 18), including at least said carbon elementary yarn (16) and at least one other elementary yarn (18), referred to as a non-carbon elementary yarn (18) comprising a plurality of fibres, at least a majority and preferably all of which are formed from one or more non-carbon material(s).

3. Lining according to Claim 2, in which the non-carbon elementary yarn comprises:
- a plurality of organic elementary fibre(s), for example elementary fibres belonging to the group formed by optionally pre-oxidized acrylic fibres, aramid fibres and viscose fibres,
- at least one, and preferably a plurality of non-organic elementary fibre(s), for example a plurality of elementary fibres belonging to the group formed by glass or basalt fibres, and the fibres formed by a continuous copper, brass, steel or aluminium yarn.

4. Lining according to any one of the preceding claims, in which the path of the reinforcing yarn (10, 10a, 10b, 20) forms, over each turn, an undulation that forms radial lobes, the number of which per turn is between 2 and 7, and preferably between 4 and 7.

5. Lining according to Claim 4, in which the undulation extends between two concentric circles so that the reinforcing yarn alternately touches each of these circles.

6. Lining according to any one of the preceding claims, in which the reinforcing yarn (10, 10a, 10b) extends around the central axis over a number of turns of between 6 and 15, and preferably between 7 and 13, limits included.

7. Lining according to any one of the preceding claims, in which the support layer (8) comprises:
- from 15% to 70% by volume of resin;
- from 2% to 40% by volume of carbon elementary yarn(s);
- from 1% to 40% by volume of non-carbon elementary yarn(s);
- from 5% to 30% by volume of elastomer(s);
- from 2% to 20% by volume of filler(s).

8. Lining according to any one of the preceding claims, in which the resin is a phenoplast or aminoplast resin or a mixed melamine-modified phenol/formaldehyde resin, or mixed phenol-modified melamine/formaldehyde resin, or is any mixture of several of these resins.

9. Lining according to any one of the preceding claims, in which the carbon elementary fibre (16) consists of graphitized or non-graphitized continuous elementary carbon fibres, having a fibre diameter of between 5 and 25 micrometres, this carbon elementary yarn having a linear density of between 50 and 5000 tex and a tensile strength of between 3000 MPa and 6000 MPa.

10. Lining according to either one of Claims 2 and 3, in which the non-carbon elementary yarn comprises elementary fibres from the group formed by viscose, acrylic and pre-oxidized acrylic fibres.

11. Lining according to any one of the preceding claims, in which said elastomer material belongs to the group formed by one of the following constituents or any mixture thereof: polyisoprene, styrene-butadiene copolymer and butadiene-acrylonitrile copolymer.

12. Lining according to any one of the preceding claims, in which the filler is a powder of a material belonging to the group formed by one of the following constituents or any mixture thereof: carbon black, mica, sulphur, calcium carbonate and barium sulphate.

13. Lining according to any one of the preceding claims, in which each continuous elementary carbon fibre extends over several turns around the central axis perpendicular to the friction face (6).

14. Motor vehicle clutch device, **characterized in that** it comprises a dry friction lining according to any one of Claims 1 to 13.
